# EUROPEAN PATENT APPLICATION

(11) **EP 4 538 659 A2**
(43) Date of publication of application: **16.04.2025**
(21) Application number: 24219174.0
(22) Date of filing: 11.12.2024
(51) Int. Cl.: G01H 1/14, G07B 15/02, G07C 1/30, G08G 1/042

(54) **OBJECT STATE DETERMINATION METHOD AND DEVICE, TIMEKEEPING METHOD AND DEVICE, AND ELECTRONIC PARKING DISC**

(30) Priority: 02.07.2024 CN 202410874169
(71) Applicant: Hangzhou Royal Craft Industrial Co., Ltd., Hangzhou, Zhejiang 310052 (CN)
(72) Inventor: MIN, Xing, Hangzhou, 310052 (CN); YAO, Xiaoyong, Hangzhou, 310052 (CN)
(74) Representative: Patent 42

(57) **Abstract**

Disclosed are a method and device for determining the state of an object, a timekeeping method and device, and an electronic parking disk. The method for determining the state of an object comprises: obtaining multiple vibration frequency data of an object within a first preset time length, and determining whether the object is in a static state or a state to be determined again based on the multiple vibration frequency data; when the object is determined to be in a state to be determined for a second time, obtaining multiple geomagnetic intensity data of the object within a second preset time length, and determining whether the object is in a static state or a moving state based on the multiple geomagnetic intensity data. The methods and devices as provided improve accuracy of object state determination and at the same time ensures a low cost.

## Description

### TECHNICAL FIELD

The present application claims priority to China Patent Application No. 202410874169.3, entitled "Object State Determination Method and Device, Timekeeping Method And Device, And Electronic Parking Disc", filed on 2nd July, 2024.

The following relates generally to the technical field of object state determination, and more specifically to the object state determination method and device, the timekeeping method and device, and the electronic parking disc.

### Background

Currently, the determination of a static state or a moving state of an object is usually realized using an acceleration detection device or a vibration detection device set at the object, i.e. the object is determined to be in a moving state when the presence of acceleration or vibration is detected.

However, the acceleration detection device increases the cost of detection when detecting the state of the object due to its large production cost. A single vibration detection device, although less expensive to produce, has more interfering factors when it is used to determine the state of an object, for example, when the object is a vehicle, the vibration of the vehicle's engine operation, the activities of the vehicle's occupants, and the weather factors outside the vehicle (windy, rainy, hail, etc., hitting the windows of the vehicle) may all result in the possibility of state misjudgement.

Accordingly, there is an urgent need for a method that improves the accuracy of state determination of an object while keeping the cost of object state determination low.

### SUMMARY

The embodiments of this specification provide a method and device for determining the state of an object, a timekeeping method and device, and an electronic parking disc, which can improve the accuracy of determining the state of an object while ensuring that the cost of determining the state is low. Its technical solution is as follows:

In an aspect, the invention provides an object state determination method, comprising the following steps; a first determination step: acquiring multiple vibration frequency data of an object within a first preset time length; and determining whether the object is in a static state or a state to be determined for a second time based on multiple vibration frequency data; and a second determination step: acquiring multiple geomagnetic intensity data of the object within a second preset time length when the object is determined to be in a state to be determined for a second time; and determining whether the object is in a static state or a moving state based on multiple geomagnetic intensity data.

Preferably, when the object is determined to be in a static state based on multiple geomagnetic intensity data, returning to execute the first determination step; when the object is determined to be in a moving state based on multiple geomagnetic intensity data, returning to execute the second determination step.

Preferably, the step determining whether the object is in a static state or a state to be determined for a second time based on multiple vibration frequency data comprises: step S1022: obtaining a preset vibration frequency threshold; step S1024: determining whether the object is in a static state or a state to be determined for a second time based on multiple vibration frequency data and vibration frequency thresholds.

Preferably, the step S1024 comprises: step S10242: obtaining a preset first proportion threshold; step S10244: determining a proportion of non-vibrating data in multiple vibration frequency data based on multiple vibration frequency data and vibration frequency thresholds; step S10246: determining that the object is in a static state or a state to be determined again based on the proportion of non-vibrating data and the first proportion threshold.

Preferably, the step determining whether the object is in a static state or a moving state based on multiple geomagnetic intensity data comprises: step S1042: obtaining geomagnetic intensity change threshold data; step S1044: based on the geomagnetic intensity data, obtaining geomagnetic intensity change data corresponding to each of all adjacent geomagnetic intensity data; step S1046: determining whether the object is in a static state or in a moving state based on the geomagnetic intensity change threshold data and the geomagnetic intensity change data corresponding to each of all adjacent geomagnetic intensity data.

As a preferred solution, the step S1046 further includes:
step S10462: obtaining a preset second proportion threshold; step S10464: determining a proportion of non-magnetic change data in all geomagnetic intensity change data based on the geomagnetic intensity change threshold data and the geomagnetic intensity change data corresponding to each of all adjacent geomagnetic intensity data; step S10466: determining whether the object is in a static state or in a moving state based on the proportion of non-magnetic change data and the second proportion threshold.

As a preferred solution, the step S1042 includes:
step S10422: obtaining preset basic intensity change threshold data;
step S10424: obtaining the ambient temperature information of the object and/or the geographical location information of the object;
step S10426: based on the ambient temperature information of the object and/or the geographical location information of the object, performing data compensation on the basic intensity change threshold data to obtain the geomagnetic intensity change threshold data.

Preferably, the step S10466 comprises: step S104662: obtaining the distribution of non-magnetic change data in all geomagnetic intensity change data; step S104664: determining whether the object is in a static state or in a moving state based on the proportion of non-magnetic change data, the second proportion threshold, and the distribution of non-magnetic change data in all geomagnetic intensity change data.

Preferably, the step S104664 comprises: step S1046642: determining whether the object is in a static state or in a state to be determined for a third time based on the proportion of non-magnetic change data and the second proportion threshold; step S1046644: determining whether the object is in a static state or in a moving state, based on the distribution of non-magnetic change data in all geomagnetic intensity change data.

Preferably, each of the multiple geomagnetic intensity data includes X-axis geomagnetic intensity sub-data, Y-axis geomagnetic intensity sub-data, and Z-axis geomagnetic intensity sub-data; obtaining geomagnetic intensity change data between two adjacent geomagnetic intensity data, including: S10442: obtaining X-axis change data between two X-axis geomagnetic intensity sub-data corresponding to two adjacent geomagnetic intensity data; S10444: obtaining Y-axis change data between two Y-axis geomagnetic intensity sub-data corresponding to two adjacent geomagnetic intensity data; S10446: obtaining Z-axis change data between two Z-axis geomagnetic intensity sub-data corresponding to two adjacent geomagnetic intensity data; S10448: based on the X-axis change data, the Y-axis change data, and the Z-axis change data, obtaining the total change data of geomagnetic intensity between two adjacent geomagnetic intensity data.

Preferably, the geomagnetic intensity change threshold data includes a single-axis intensity change threshold for comparison with the X-axis change data, the Y-axis change data, and the Z-axis change data, and a total intensity change threshold for comparison with the total geomagnetic intensity change data; the step S10464 includes: determining the proportion of non-magnetic change data in all geomagnetic intensity change data, based on the single-axis intensity change threshold, the total intensity change threshold, and the geomagnetic intensity change data corresponding to each of all two adjacent geomagnetic intensity data.

In another aspect, the invention provides a timekeeping method, characterized in that it comprises: confirming an object state with the object state determination method according to the invention; performing a timekeeping operation based on the confirmed object state.

As a preferred solution, the timekeeping includes a function for obtaining a base time when the state of the object changes.

In another aspect, the invention provides an object state determination device, characterized in that the object state is confirmed by using the object state determination method according to the invention.

In another aspect, the invention provides a timekeeping device, characterized in that it comprises the object state determination device according to the invention, and also comprises a timekeeping module connected to the object state determination device; the timekeeping module performs a timekeeping operation based on the object state determined by the object state determination device.

In another aspect, the invention provides an electronic parking disc, remarkable in that it comprises the timekeeping device in accordance with the invention.

As a preferred solution the electronic parking disc further includes a display module; the electronic parking disc obtains a base time through the timekeeping device when a vehicle changes from a moving state to a static state, and displays a parking start time through the display module when the vehicle is in the static state, and stops displaying the parking start time when the vehicle is in the moving state.

As a preferred solution, the electronic parking disc further comprises a display module; the electronic parking disc obtains a base time through the timekeeping device (300) when a vehicle changes from a moving state to a static state, and displays a parking start time through the display module when the vehicle is in a static state, and stops displaying the parking start time when the vehicle is in a moving state.

In another aspect, the invention provides an electronic device, comprising a processor and a memory; the processor is connected to the memory; the memory is used to store executable program code; the processor runs a program corresponding to the executable program code by reading the executable program code stored in the memory, so as to execute the method according to the invention.

In a seventh aspect, an embodiment of the present specification provides a computer storage medium, the computer storage medium stores a plurality of instructions, and the instructions are suitable for being loaded by the processor and executing the steps described in the first aspect of the above embodiment.

The beneficial effects brought by the technical solutions provided in some embodiments of the present specification include at least:
Determining the state of an object by combining vibration frequency detection with geomagnetic intensity data detection. Wherein, the vibration frequency detection is only used as a pre-detection, and the main state identification is completed through the geomagnetic intensity data detection. There are fewer interference factors in the process of determining the state of the object through the geomagnetic intensity data, so the accuracy is higher.

Since the power consumption of geomagnetic intensity data detection is greater than that of vibration frequency data detection, the geomagnetic intensity data detection is only performed when the object cannot be directly judged to be in a static state through vibration frequency detection, thereby reducing the power consumption in the process of determining the state of the object.

The production costs of the vibration detection device and the geomagnetic data detection device are both low. Even if both are used at the same time, the cost is less than the state determination device using an accelerometer, thereby reducing the application cost of the object state determination device.

### BRIEF DESCRIPTION OF THE DRAWINGS

In order to more clearly illustrate the technical solutions in the embodiments of the present invention or the prior art, the drawings required to be used in the embodiments or the prior art description will be briefly introduced below. Obviously, the drawings described below are only some embodiments of the present invention. For ordinary technicians in this field, other drawings can be obtained based on these drawings without paying creative labor.
FIG. 1 is a flow chart of an object state determination method provided in an embodiment of this specification.
FIG. 2 is a schematic diagram of the structure of an object state determination device provided in an embodiment of the present specification.
FIG. 3 is a schematic diagram of the structure of a timekeeping device provided in an embodiment of the present specification.
FIG. 4 is a schematic diagram of the structure of an electronic device provided in an embodiment of the present specification.

### DETAILD DISCRIPTION OF THE EMBODIMENTS

The technical solutions in the embodiments of the present specification will be described clearly and completely below in conjunction with the drawings in the embodiments of the present specification.

The terms "first", "second", "third", etc. in the description and claims in this specification and the above drawings are used to distinguish different objects, rather than to describe a specific order. In addition, the terms "including" and "having" and any of their variations are intended to cover non-exclusive inclusions. For example, a process, method, system, product or device that includes a series of steps or units is not limited to the listed steps or units, but may optionally include steps or units that are not listed, or may optionally include other steps or units inherent to these processes, methods, products or devices.

The following description provides examples and does not limit the scope, applicability or examples set forth in the claims. Changes may be made to the functions and arrangements of the described elements without departing from the scope of the present specification. Various examples may appropriately omit, replace or add various processes or components. For example, the described method may be performed in an order different from the described order, and various steps may be added, omitted or combined. In addition, the features described in some examples may be combined in other examples.

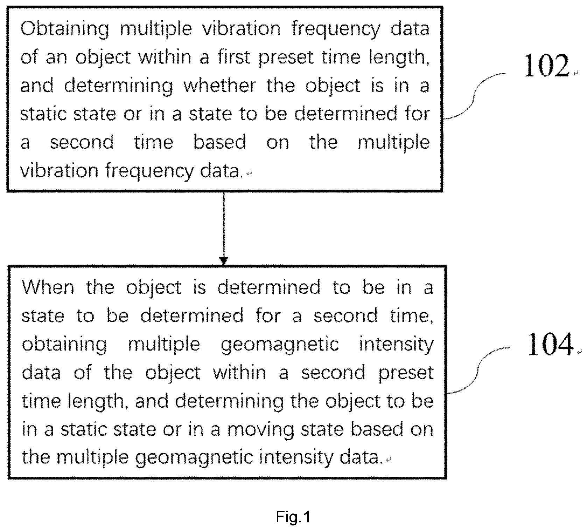

Referring to FIG. 1, FIG. 1 is a flow chart of a method for determining an object state provided in an embodiment of the present specification, which may include the following steps:
Step 102, obtaining multiple vibration frequency data of an object within a first preset time length, and determining the object to be in a static state or a state to be determined for a second time based on the multiple vibration frequency data;
Step 104, when determining whether the object is in a state to be determined for a second time, obtaining multiple geomagnetic intensity data of the object within a second preset time length, and determining the object to be in a static state or a moving state based on the multiple geomagnetic intensity data.

After step 104 in one embodiment of the present specification, the following steps are further included:
Step 106, when it is determined that the object is in a static state based on multiple geomagnetic intensity data, returning to execute the step of acquiring multiple vibration frequency data of the object within a first preset time length, and determining whether the object is in a static state or a state to be determined for a second time based on the multiple vibration frequency data;
Step 108, when it is determined that the object is in a moving state based on multiple geomagnetic intensity data, returning to execute the step of acquiring multiple geomagnetic intensity data of the object within a second preset time length, and determining whether the object is in a static state or a moving state based on the multiple geomagnetic intensity data.

It can be understood in the object state determination method provided in this embodiment that:

The object state is determined by combining vibration frequency detection and geomagnetic intensity data detection. The vibration frequency detection is only used as a pre-detection, and the main state identification is completed by geomagnetic intensity data detection. There are fewer interference factors in the process of determining the object state by geomagnetic intensity data, so the accuracy is higher.

Since the power consumption of geomagnetic intensity data detection is greater than that of vibration frequency data detection, geomagnetic intensity data detection is only performed when the object cannot be directly judged to be in a static state by vibration frequency detection, thereby reducing the power consumption in the process of determining the object state.

The production costs of the vibration detection device and the geomagnetic data detection device are both low. Even if both are used at the same time, the cost is less than that of the state determination device using an accelerometer, thereby reducing the application cost of the object state determination device.

Among them, it should be supplemented that:
The object can be, but is not limited to, all drivable carriers such as cars, motorcycles, bicycles, etc., and can also be, for example, a robot that plays a guiding role in shopping malls and museums.

The vibration frequency data can be detected by a vibration frequency detection device fixed on the object, and the geomagnetic intensity data can be detected by a geomagnetic data detection device fixed on the object.

These objects will vibrate during the movement, so the vibration detection device set on the object can detect the corresponding vibration frequency data. Since the earth itself is a huge magnet with its own magnetic field, the geomagnetic detection device set on it also moves during the movement of the object, and then due to the change in the position of the geomagnetic detection device in the earth's magnetic field, the geomagnetic intensity data detected by it will also change, and the change in the geomagnetic intensity data is not affected by the vibration factor of the engine operation, the activity factor of the people in the car, and the weather factor outside the car (strong wind, heavy rain, hail, etc. hitting the car window). Therefore, the accuracy of determining the state of the object through the geomagnetic detection device is higher than that of determining the state of the object through the vibration detection device.

In one embodiment of the present specification, the second preset time length is greater than the first preset time length.

It can be understood that in the object state determination method provided in multiple embodiments of this specification, the vibration frequency detection is only used as a pre-detection, and the main state identification is completed by geomagnetic intensity data detection (it can be understood that: the state of the object that cannot be correctly determined by the vibration frequency data is determined by the geomagnetic intensity data). Therefore, in order to improve the detection accuracy, the second preset time length should be set to be greater than the first preset time length.

The first preset time length can be but not limited to 3 seconds, 5 seconds, 7 seconds, etc., and the second preset time length can be but not limited to 10 seconds, 15 seconds, 20 seconds, etc., which can be set according to actual conditions.

In one embodiment of this specification, the determination (Step 1021) of whether the object is in a static state or a state to be determined for a second time based on multiple vibration frequency data includes:
Step 1022, obtaining a preset vibration frequency threshold;
Step 1024, determining whether the object is in a static state or a state to be determined for a second time based on multiple vibration frequency data and the vibration frequency threshold.

It can be understood that the vibration frequency detection is only used as a pre-detection, so it only needs to complete the part of the work that can make accurate judgments.

Therefore, in this embodiment, a vibration frequency threshold is preset, and the vibration frequency threshold can be understood as a lower limit value for distinguishing whether the object is in a static state.

That is, if the vibration frequency data is lower than the vibration frequency threshold at this time, the object is definitely in a static state, which can be set according to actual conditions.

In one embodiment of the present specification, the determination (Step 1024) of whether the object is in a static state or a state to be determined for a second time based on multiple vibration frequency data and vibration frequency thresholds includes:
Step 10242, obtaining a preset first proportion threshold;
Step 10244, based on multiple vibration frequency data and vibration frequency thresholds, determining the proportion of non-vibration data in multiple vibration frequency data;
Step 10246, based on the proportion of non-vibration data and the first proportion threshold, determining whether the object is in a static state or a state to be determined for a second time.

It is understandable that the vibration frequency data of multiple vibration frequency data that is lower than the vibration frequency threshold can be considered as no-vibration data. Therefore, when the proportion of no-vibration data in all vibration frequency data is greater than a certain value, it can be basically considered that the object is in a static state within the first preset time length. Even if some vibration data appears, it can be basically considered that it is due to the above-mentioned factors such as engine running vibration, factors of personnel activities in the car, and factors of weather outside the car. The first proportion threshold can be, but is not limited to, set to 80%, 85%, etc., and can be set specifically according to actual conditions.

It can also be understood that when the proportion of no-vibration data in all vibration frequency data is less than a certain value, although it may be the vibration caused by the real movement of the object, it may still be the vibration of the object caused by the continuous influence of factors such as the above-mentioned engine running vibration, factors of personnel activities in the car, and factors of weather outside the car. Therefore, at this time, it is not directly determined whether the object is in motion, but a secondary confirmation is continued based on the geomagnetic intensity data.

In one embodiment of the present specification, the method of determining whether an object is in a static state or in a moving state based on multiple geomagnetic intensity data includes:
Step 1042, obtaining geomagnetic intensity change threshold data;
Step 1044, based on the multiple geomagnetic intensity data, obtaining geomagnetic intensity change data corresponding to each of all adjacent geomagnetic intensity data;
Step 1046, determining whether the object is in a static state or in a moving state based on the geomagnetic intensity change threshold data and the geomagnetic intensity change data corresponding to each of all adjacent geomagnetic intensity data.

Based on the above, it can be understood that when the object is in motion, the geomagnetic detection device fixed thereon also moves, and then because the position of the geomagnetic detection device in the earth's magnetic field changes, the geomagnetic intensity data detected by it will also change, so the object can be determined to be in a static state or in a moving state by the change of the geomagnetic intensity data.

In addition, since the earth's magnetic field itself has a certain weak fluctuation, even if the geomagnetic detection device does not move, weak fluctuations in the geomagnetic data may occur due to such factors.

Therefore, in this embodiment, the geomagnetic intensity change threshold data can be understood as a lower limit value for determining whether an object is moving, that is, a fluctuation less than the lower limit value is definitely not considered to be the object is moving, and the object is directly considered to be in a static state, and if a fluctuation greater than the lower limit value occurs, it is considered that the object is moving.

In one embodiment of the present specification, the acquisition of geomagnetic intensity change threshold data includes:
Step 10422, acquiring preset basic intensity change threshold data (Note: the basic intensity change threshold data can be understood as the intensity change threshold data corresponding to a certain temperature and a certain geographical location);
Step 10424, acquiring the ambient temperature information of the object and/or the geographical location information of the object;
Step 10426, based on the ambient temperature information of the object and/or the geographical location information of the object, the basic intensity change threshold data is compensated to obtain the geomagnetic intensity change threshold data.

It is understandable that, due to the temperature dependence of the magnetic materials in the geomagnetic data detection device, the magnetic properties of these materials will change with the change of temperature. Therefore, the geomagnetic detection device is located in different ambient temperatures. Even if it changes the same position, the detected geomagnetic intensity change data will also have certain differences.

It is also understandable that, since the earth's magnetic field is uneven in different regions, for example, near the equator, the magnetic field intensity is small and the change range is also small; near the poles, the magnetic field intensity is large and the change range is also large. Therefore, the geomagnetic detection device is located in different geographical locations. Even if it changes the same position distance, the detected geomagnetic intensity change data will also have certain differences.

Therefore, in this embodiment, based on the ambient temperature information of the object and/or the geographical location information of the object, the basic intensity change threshold data is compensated to obtain the geomagnetic intensity change threshold data, and then when the object is subsequently determined to be in a static state or a moving state, the influence caused by the change of ambient temperature and/or geographical location is eliminated.

In one embodiment of the present specification, the method of determining whether an object is in a static state or in a moving state based on the geomagnetic intensity change threshold data and the geomagnetic intensity change data corresponding to each other between all adjacent geomagnetic intensity data includes:
Step 10462, obtaining a preset second proportion threshold;
Step 10464, determining the proportion of non-magnetic change data in all geomagnetic intensity change data based on the geomagnetic intensity change threshold data and the geomagnetic intensity change data corresponding to each other between all adjacent geomagnetic intensity data;
Step 10466, determining whether the object is in a static state or in a moving state based on the proportion of non-magnetic change data and the second proportion threshold.

It can be understood that even if the geomagnetic detection device does not move, the factors causing the fluctuation of the geomagnetic detection data, in addition to the above-mentioned weak fluctuation of the earth's magnetic field, may also be due to the existence of some metal objects in the surrounding environment of the object, such as the movement of metal objects, and the surrounding metal objects passing by, thereby affecting the magnetic field environment around the object.

It can also be understood that if such metal material objects pass by the object at a slow speed, the impact on the earth's magnetic field around the object to be confirmed is small, so the determination of the object's state will be affected only when such metal material objects pass by the object to be confirmed quickly.

When passing by quickly, the fluctuation of geomagnetic detection data is usually large, greater than the geomagnetic intensity change threshold data. Therefore, in this case, if the state is judged only based on the above geomagnetic intensity change threshold data, it is easy to misjudge that the object is moving.

Since such metal material objects pass by the object at a fast speed, the duration of the geomagnetic data fluctuation caused by this reason should be short, that is, the proportion of such fluctuation phenomenon in the entire state confirmation process should be small.

Therefore, in this embodiment, based on the geomagnetic intensity change threshold data and the geomagnetic intensity change data corresponding to each of all adjacent geomagnetic intensity data, the proportion of non-magnetic change data in all geomagnetic intensity change data is determined, and based on the proportion of non-magnetic change data and the second proportion threshold, it is determined whether the object is in a static state or in a moving state. For example, when the proportion of no magnetic change data is greater than the second proportion threshold, the object is determined to be in a static state; when the proportion of no magnetic change data is less than the second proportion threshold, the object is determined to be in a moving state.

In order to ensure the accuracy of state determination, the second proportion threshold can be, but is not limited to, set to 80%, 85%, etc. It can be set specifically according to actual conditions.

In this case, the no magnetic change data and magnetic change data in all geomagnetic intensity change data may be arranged as follows:
no magnetic change data, no magnetic change data, no magnetic change data, no magnetic change data, no magnetic change data, no magnetic change data, no magnetic change data, no magnetic change data, no magnetic change data, no magnetic change data, magnetic change data, magnetic change data, magnetic change data, magnetic change data, no magnetic change data, no magnetic change data, no magnetic change data, no magnetic change data, no magnetic change data, no magnetic change data, no magnetic change data, no magnetic change data, no magnetic change data, no magnetic change data.

In one embodiment of the present specification, the method of determining whether an object is in a static state or in a moving state based on the proportion of non-magnetic change data and the second proportion threshold comprises:
Step 104662, obtaining the distribution of non-magnetic change data in all geomagnetic intensity change data;
Step 104664, determining whether the object is in a static state or in a moving state based on the proportion of non-magnetic change data, the second proportion threshold, and the distribution of non-magnetic change data in all geomagnetic intensity change data.

It can be understood that if there are a large number of metal objects passing by the surrounding area, even if the object is in a static state, the proportion of non-magnetic change data may still be less than the second proportion threshold. At this time, if the state is determined only based on the proportion, misjudgment may occur.

In this case, if the object is in a static state, the distribution of non-magnetic change data in all geomagnetic intensity change data should be intermittent. Therefore, in this embodiment, the distribution of non-magnetic change data in all geomagnetic intensity change data is also considered.

Therefore, in one embodiment of the present specification, the method of determining whether an object is in a static state or in a moving state based on the proportion of non-magnetic change data, the second proportion threshold, and the distribution of non-magnetic change data in all geomagnetic intensity change data includes:
Step 1046642, determining whether the object is in a static state or in a state to be confirmed for a third time based on the proportion of non-magnetic change data and the second proportion threshold;

That is, it can be understood that when the proportion of non-magnetic change data is greater than the second proportion threshold, the object is determined to be in a static state, and when the proportion of non-magnetic change data is less than the second proportion threshold, the object is not directly determined to be in a moving state, but is first determined to be in a state to be confirmed for a third time.

Step 1046644, when it is determined that the object is in a state to be confirmed for a third time, based on the distribution of non-magnetic change data in all geomagnetic intensity change data, the object is determined to be in a static state or in a moving state.

That is, when the distribution of non-magnetic change data in all geomagnetic intensity change data is intermittent, it is still possible to determine that the object is in a static state.

It can be understood that the object itself may also have intermittent start and stop operations during the movement process, so an intermittent threshold corresponding to the number of intermittent starts and stops that may occur during the movement of an object can be set here (Note: that is, under normal circumstances, the maximum number of normal starts and stops that may occur within the second preset time length).

Further, the distribution of the non-magnetic change data in all geomagnetic intensity change data determines that the object is in a static state or a moving state, including:
Based on the intermittent occurrence number of non-magnetic change data in all geomagnetic intensity change data and the intermittent number threshold, determine that the object is in a static state or a moving state.

That is, it can be understood that: when the intermittent occurrence number of non-magnetic change data in all geomagnetic intensity change data is greater than the intermittent number threshold, the object is determined to be in a static state. Because the object cannot complete so many start and stop operations in a short time, the intermittent multiple occurrences of non-magnetic change data at this time are likely to be because multiple metal objects pass by the object in a short period of time, thereby causing multiple intermittent short-term effects on the magnetic field at the location of the object.

In this case, the non-magnetic change data and magnetic change data in all geomagnetic intensity change data may be arranged as follows:
No magnetic change data, no magnetic change data, no magnetic change data, magnetic change data, magnetic change data, magnetic change data, no magnetic change data, no magnetic change data, magnetic change data, magnetic change data, no magnetic change data, no magnetic change data, no magnetic change data, no magnetic change data, no magnetic change data.

### For example:

Assuming that the second preset time is 10s, the intermittent number threshold is 1, that is, assuming that the number of starts and stops within 10s during the normal movement of the object will not be greater than 1, so the number of intermittent appearances of the non-magnetic change data should not be greater than 1 (Note: one intermittent appearance can be understood as: no magnetic change data appears-no magnetic change data disappears-no magnetic change data appears).

According to the above arrangement, it can be seen that the number of intermittent appearances of the above non-magnetic change data is 2 times, which is greater than the intermittent number threshold 1, so it is still considered that the object is in a static state.

In one embodiment of the present specification, each of the multiple geomagnetic intensity data includes X-axis geomagnetic intensity sub-data, Y-axis geomagnetic intensity sub-data, and Z-axis geomagnetic intensity sub-data;
The step of obtaining geomagnetic intensity change data between two adjacent geomagnetic intensity data includes:
Step 10442, obtaining X-axis change data between two X-axis geomagnetic intensity sub-data corresponding to two adjacent geomagnetic intensity data;
Step 10444, obtaining Y-axis change data between two Y-axis geomagnetic intensity sub-data corresponding to two adjacent geomagnetic intensity data;
Step 10446, obtaining Z-axis change data between two Z-axis geomagnetic intensity sub-data corresponding to two adjacent geomagnetic intensity data;
Step 10448, obtaining the total change data of geomagnetic intensity between two adjacent geomagnetic intensity data based on the X-axis change data, the Y-axis change data, and the Z-axis change data.

It can be understood that in this embodiment, the change of geomagnetic intensity data is evaluated from multiple directions, including X-axis change data, Y-axis change data, Z-axis change data, and total geomagnetic intensity change data, so that the final state determination is more accurate.

In one embodiment of the present specification, the geomagnetic intensity change threshold data includes a single-axis intensity change threshold for comparison with the X-axis change data, the Y-axis change data, and the Z-axis change data, and a total intensity change threshold for comparison with the total geomagnetic intensity change data;
The method of determining the proportion of non-magnetic change data in all geomagnetic intensity change data based on the geomagnetic intensity change threshold data and the corresponding geomagnetic intensity change data between all adjacent geomagnetic intensity data includes:
Determining the proportion of non-magnetic change data in all geomagnetic intensity change data based on the single-axis intensity change threshold, the total intensity change threshold, and the corresponding geomagnetic intensity change data between all adjacent geomagnetic intensity data.

That is, in this embodiment, not only a uniaxial intensity change threshold is set for evaluation in a uniaxial direction, but also a total intensity change threshold is set for overall evaluation, so as to make the determination of no magnetic change data more accurate.

It can be set as follows: when the axis change data in any axis direction is greater than the uniaxial intensity change threshold or the total geomagnetic intensity change data is greater than the total intensity change threshold, it is determined to be magnetic change data.

The above describes a specific embodiment of this specification. Other embodiments are within the scope of the attached claims. In some cases, the actions or steps recorded in the claims can be performed in an order different from that in the embodiment and still achieve the desired results. In addition, the process depicted in the drawings does not necessarily require the specific order or continuous order shown to achieve the desired results. In some embodiments, multi-tasking and parallel processing are also possible or may be advantageous.

The embodiment of this specification also provides a timekeeping method, which includes:
Using the object state determination method described in the above embodiment to confirm the object state;
Performing a timekeeping operation based on the confirmed object state.

Specifically, it can be set, but not limited to, to start timekeeping when the object is determined to be in a static state, and stop timekeeping when the object is determined to be in a moving state; or start timekeeping when the object is determined to be in a moving state, and stop timekeeping when the object is determined to be in a static state.

Specifically, the timekeeping may be a calculation of the duration of time, or it may include a function for obtaining a base time for recording a point in time when the state of the object changes, such as recording a point in time when the object changes from a static to a moving state, or recording a point in time when the object changes from a moving state to a static state.

The various embodiments in this specification are described in a progressive manner, and the same and similar parts between the various embodiments can be referred to each other, and each embodiment focuses on the differences from other embodiments. In particular, for the timekeeping method embodiment, since it is basically similar to the object state determination method embodiment, the description is relatively simple, and the relevant parts can be referred to the partial description of the object state determination method embodiment.

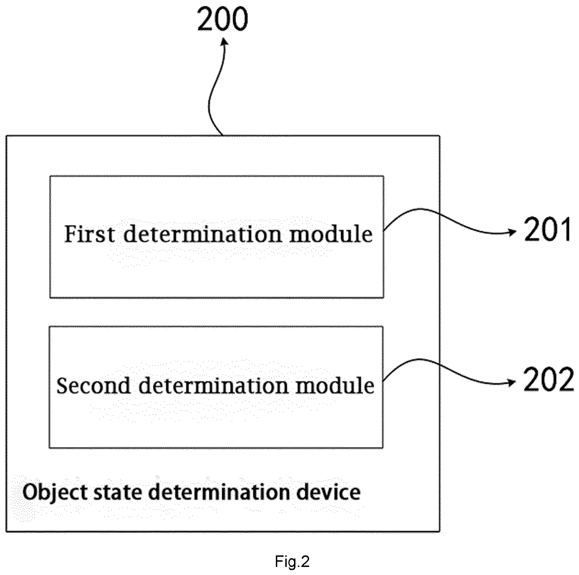

Next, please refer to Figure 2, which shows a structural schematic diagram of an object state determination device provided in an embodiment of this specification.

The object state determination device 200 includes a first determination module 201 and a second determination module 202;
The first determination module 201 obtains a plurality of vibration frequency data of the object within a first preset time length, and determines that the object is in a static state or a state to be determined for a second time based on the plurality of vibration frequency data;
The second determination module 202, when determining whether the object is in a state to be determined for a second time, obtains a plurality of geomagnetic intensity data of the object within a second preset time length, and determines that the object is in a static state or a state to be determined for a second time based on the plurality of geomagnetic intensity data.
   And:
When the second determination module 202 determines that the object is in a static state, the first determination module 201 continues to execute the step of obtaining a plurality of vibration frequency data of the object within the first preset time length, and determining whether the object is in a static state or a state to be determined for a second time based on the plurality of vibration frequency data;
When the second determination module 202 determines that the object is in a moving state, the second determination module 202 continues to execute the step of obtaining a plurality of geomagnetic intensity data of the object within the second preset time length, and determining whether the object is in a static state or a moving state based on the plurality of geomagnetic intensity data.

Each embodiment in this specification is described in a progressive manner. The same or similar parts between the embodiments can be referred to each other. Each embodiment focuses on the differences from other embodiments. In particular, for the embodiment of the object state determination device, since it is basically similar to the embodiment of the object state determination method, the description is relatively simple. For the relevant parts, refer to the partial description of the embodiment of the object state determination method.

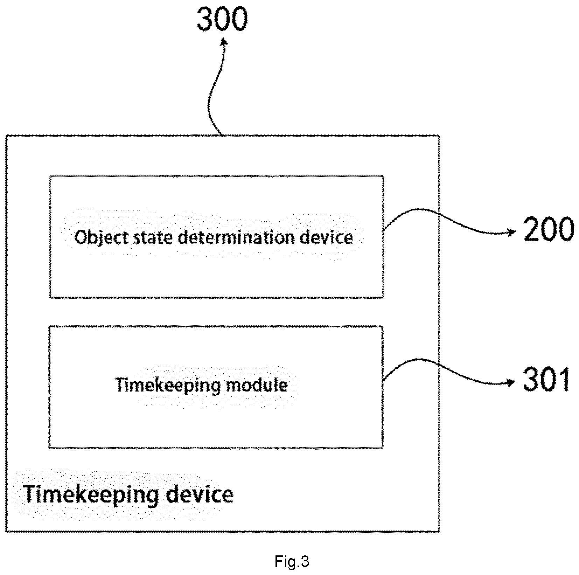

Next, please refer to Figure 3, which shows a structural schematic diagram of a timekeeping device provided by an embodiment of this specification.

The timekeeping device 300 includes the object state determination device 200 described in the above embodiment, and also includes a timekeeping module 301 connected to the state determination device 200;
The timekeeping module 301 performs a timekeeping operation based on the object state determined by the object state determination device.

Specifically, it can be but not limited to setting to start timekeeping when the object is determined to be in a static state and stop timekeeping when the object is determined to be in a moving state; or start timekeeping when the object is determined to be in a moving state and stop timekeeping when the object is determined to be in a static state.

The timekeeping device may output data including object state data, time duration data, raw or algorithmically processed base time data. Each embodiment in this specification is described in a progressive manner. The same or similar parts between the embodiments can be referred to each other. Each embodiment focuses on the differences from other embodiments. In particular, for the timekeeping device embodiment, since it is basically similar to the object state determination method embodiment, the description is relatively simple. For the relevant parts, refer to the partial description of the object state determination method embodiment.

The embodiment of this specification also provides an electronic parking disc, which includes the timekeeping device 300 described in the above embodiment. The electronic parking disc is used in a parking scene where an automatic parking time timekeeping system is not set (for example, a system that automatically recognizes the license plate when the vehicle enters and exits the parking lot to record the parking time). At this time, the object described in the above multiple embodiment schemes is a vehicle, and the metal object described in the above multiple embodiment schemes is other passing vehicles. In such a parking scene, when the user drives into the parking lot and stops the car, a self-service timekeeping operation should be performed. Therefore, after the electronic parking disc described in this embodiment is set in the car, the timekeeping device in the electronic parking disc can automatically time according to the state of the vehicle, specifically, when the vehicle is determined to be in a static state, the timekeeping starts, and when the vehicle is determined to be in a moving state, the timekeeping stops. Further, the subsequent parking fee collection work can be performed based on the timekeeping duration of the electronic parking disc.

Specifically, the present specification provides an electronic parking disc, including a timekeeping device 300, a display module, and a power supply module.

The electronic parking disc, with the power supply module as the power source of the system, can acquire the vehicle state change from parking to driving and from driving to parking through the timekeeping device 300, acquire the base time when the vehicle changes from the driving state to the parking state, and display the parking start time through the display module when the vehicle is in the parking state, and stop displaying the parking start time when the vehicle is in the driving state.

Specifically, the timekeeping device 300 of the parking disc obtains a state change of the vehicle state from moving to stationary through vibration detection and geomagnetic detection of the object state determination device 200, at which time the base time data is retrieved through the timekeeping module 301 and the parking start time is displayed through the display module. The acquired base time can be rounded to the next half-point moment for display as the parking start time, for example, if the base time when the vehicle changes from a moving state to a parking state is 11: 14, it can be rounded to 11:30 for display, and for example, if the base time when the vehicle changes from a moving state to a parking state is 11:45, it can be rounded to 12:00 for display, and, of course, if it happens to be a half hour, then no rounding is performed, for example, if the base time when the vehicle changes from the driving state to the parking state is 11:30 or 12:00, then no rounding is performed, so as to simplify the recording of the parking time, so that the user can enjoy a better free parking service. When the object state determination device 200 determines that the vehicle has undergone a state change from stationary to moving, the parking disc stops displaying that parking start time.

The timekeeping device may further include an input module for adjusting the base time.

The various embodiments in this specification are described in a progressive manner, and the same and similar parts between the various embodiments can be referred to each other. Each embodiment focuses on the differences from other embodiments. In particular, for the electronic parking disc embodiment, since it is basically similar to the object state determination method embodiment, the description is relatively simple, and the relevant parts can be referred to the partial description of the object state determination method embodiment.

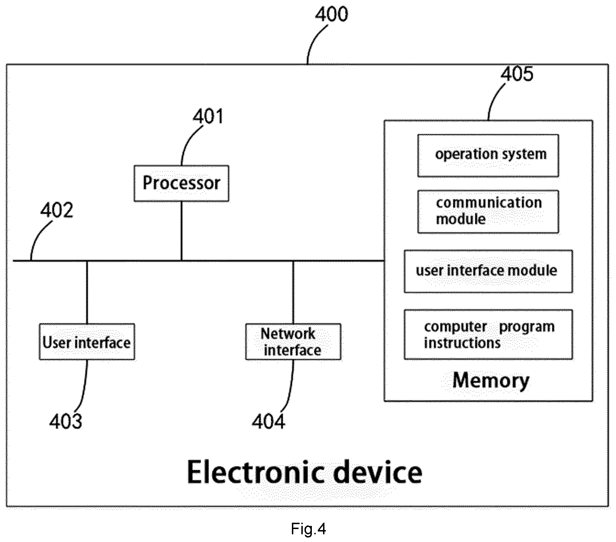

Please refer to FIG. 4 for a structural schematic diagram of an electronic device provided in an embodiment of this specification.

As shown in FIG. 4, the electronic device 400 may include: at least one processor 401, at least one network interface 404, a user interface 403, a memory 405, and at least one communication bus 402.

Among them, the communication bus 402 can be used to realize the connection and communication of the above-mentioned components.

The user interface 403 may include buttons, and the optional user interface may also include a standard wired interface and a wireless interface.

The network interface 404 may include, but is not limited to, a Bluetooth module, an NFC module, a Wi-Fi module, etc.

The processor 401 may include one or more processing cores. The processor 401 uses various interfaces and lines to connect various parts of the entire electronic device 400, and executes various functions and processes data of the electronic device 400 by running or executing instructions, programs, code sets or instruction sets stored in the memory 405, and calling data stored in the memory 405. Optionally, the processor 401 may be implemented in at least one hardware form of DSP, FPGA, and PLC. The processor 401 may integrate one or a combination of CPU, GPU, and modem. The CPU mainly processes the operating system, user interface, and application program; the GPU is responsible for rendering and drawing the content to be displayed on the display screen; and the modem is used to process wireless communication. It is understandable that the above-mentioned modem may not be integrated into the processor 401, but may be implemented by a single chip.

The memory 405 may include a RAM or a ROM. Optionally, the memory 405 includes a non-transitory computer-readable medium. The memory 405 may be used to store instructions, programs, codes, code sets or instruction sets. The memory 405 may include a program storage area and a data storage area, wherein the program storage area may store instructions for implementing an operating system, instructions for at least one function (such as a touch function, a sound playback function, an image playback function, etc.), instructions for implementing the above-mentioned various method embodiments, etc.; the data storage area may store data involved in the above-mentioned various method embodiments, etc. The memory 405 may also be at least one storage device located away from the aforementioned processor 401. The memory 405 as a computer storage medium may include an operating system, a network communication module, a user interface module, and an object state determination application. The processor 401 may be used to call the object state determination application stored in the memory 405 and execute the steps of the object state determination method mentioned in the above-mentioned embodiment.

The embodiments of this specification also provide a computer-readable storage medium, in which instructions are stored. When the instructions are executed on a computer or a processor, the computer or the processor executes one or more steps in the above-mentioned method for determining the state of an object. If the components of the above-mentioned electronic device are implemented in the form of software functional units and sold or used as independent products, they can be stored in the computer-readable storage medium.

In the above-mentioned embodiments, they can be implemented in whole or in part by software, hardware, firmware or any combination thereof. When implemented by software, they can be implemented in whole or in part in the form of a computer program product. The computer program product includes one or more computer instructions. When the computer program instructions are loaded and executed on a computer, the process or function described in the embodiments of this specification is generated in whole or in part. The computer can be a general-purpose computer, a special-purpose computer, a computer network, or other programmable device. The computer instructions can be stored in a computer-readable storage medium or transmitted via the computer-readable storage medium.

## Claims

1. An object state determination method, comprising the following steps;
a first determination step (102): acquiring multiple vibration frequency data of an object within a first preset time length; and determining whether the object is in a static state or a state to be determined for a second time based on multiple vibration frequency data; and
a second determination step (104): acquiring multiple geomagnetic intensity data of the object within a second preset time length when the object is determined to be in a state to be determined for a second time; and determining whether the object is in a static state or a moving state based on multiple geomagnetic intensity data.

2. The object state determination method according to claim 1, **characterized in that**, when the object is determined to be in a static state based on multiple geomagnetic intensity data, returning to execute the first determination step (102);
when the object is determined to be in a moving state based on multiple geomagnetic intensity data, returning to execute the second determination step (104).

3. The object state determination method according to claim 1, **characterized in that** the step determining whether the object is in a static state or a state to be determined for a second time based on multiple vibration frequency data comprises:
step S1022: obtaining a preset vibration frequency threshold;
step S1024: determining whether the object is in a static state or a state to be determined for a second time based on multiple vibration frequency data and vibration frequency thresholds.

4. The object state determination method according to claim 3, **characterized in that** the step S1024 comprises:
step S10242: obtaining a preset first proportion threshold;
step S10244: determining a proportion of non-vibrating data in multiple vibration frequency data based on multiple vibration frequency data and vibration frequency thresholds;
step S10246: determining that the object is in a static state or a state to be determined again based on the proportion of non-vibrating data and the first proportion threshold.

5. The object state determination method according to claim 1, **characterized in that** the step determining whether the object is in a static state or a moving state based on multiple geomagnetic intensity data comprises:
step S1042: obtaining geomagnetic intensity change threshold data;
step S1044: based on the geomagnetic intensity data, obtaining geomagnetic intensity change data corresponding to each of all adjacent geomagnetic intensity data;
step S10462: obtaining a preset second proportion threshold;
step S10464: determining a proportion of non-magnetic change data in all geomagnetic intensity change data based on the geomagnetic intensity change threshold data and the geomagnetic intensity change data corresponding to each of all adjacent geomagnetic intensity data;
step S10466: determining whether the object is in a static state or in a moving state based on the proportion of non-magnetic change data and the second proportion threshold.

6. The object state determination method according to claim 5, **characterized in that** the step S10466 comprises:
step S104662: obtaining the distribution of non-magnetic change data in all geomagnetic intensity change data;
step S104664: determining whether the object is in a static state or in a moving state based on the proportion of non-magnetic change data, the second proportion threshold, and the distribution of non-magnetic change data in all geomagnetic intensity change data.

7. The object state determination method according to claim 6, **characterized in that** the step S104664 comprises:
step S1046642: determining whether the object is in a static state or in a state to be determined for a third time based on the proportion of non-magnetic change data and
the second proportion threshold;
step S1046644: determining whether the object is in a static state or in a moving state, based on the distribution of non-magnetic change data in all geomagnetic intensity change data.

8. The object state determination method according to claim 5, **characterized in that** each of the multiple geomagnetic intensity data includes X-axis geomagnetic intensity sub-data, Y-axis geomagnetic intensity sub-data, and Z-axis geomagnetic intensity sub-data;
obtaining geomagnetic intensity change data between two adjacent geomagnetic intensity data, including:
S10442: obtaining X-axis change data between two X-axis geomagnetic intensity sub-data corresponding to two adjacent geomagnetic intensity data;
S10444: obtaining Y-axis change data between two Y-axis geomagnetic intensity sub-data corresponding to two adjacent geomagnetic intensity data;
S10446: obtaining Z-axis change data between two Z-axis geomagnetic intensity sub-data corresponding to two adjacent geomagnetic intensity data;
S10448: based on the X-axis change data, the Y-axis change data, and the Z-axis change data, obtaining the total change data of geomagnetic intensity between two adjacent geomagnetic intensity data.

9. The object state determination method according to claim 8, **characterized in that** the geomagnetic intensity change threshold data includes a single-axis intensity change threshold for comparison with the X-axis change data, the Y-axis change data, and the Z-axis change data, and a total intensity change threshold for comparison with the total geomagnetic intensity change data;
the step S10464 includes:
determining the proportion of non-magnetic change data in all geomagnetic intensity change data, based on the single-axis intensity change threshold, the total intensity change threshold, and the geomagnetic intensity change data corresponding to each of all two adjacent geomagnetic intensity data.

10. A timekeeping method, **characterized in that** it comprises:
confirming an object state with the object state determination method according to any one of claims 1 to 9;
performing a timekeeping operation based on the confirmed object state.

11. An object state determination device, **characterized in that** the object state is confirmed by using the object state determination method according to any one of claims 1 to 9.

12. A timekeeping device, **characterized in that** it comprises the object state determination device (200) as claimed in claim 11, and also comprises a timekeeping module (301) connected to the object state determination device (200);
the timekeeping module (301) performs a timekeeping operation based on the object state determined by the object state determination device (200).

13. An electronic parking disc, **characterized in that** it comprises the timekeeping device (300) as claimed in claim 12.

14. The electronic parking disc as shown in claim 13, **characterized in that** it further comprises a display module; the electronic parking disc obtains a base time through the timekeeping device (300) when a vehicle changes from a moving state to a static state, and displays a parking start time through the display module when the vehicle is in the static state, and stops displaying the parking start time when the vehicle is in the moving state.

15. An electronic device, comprising a processor (401) and a memory (405);
the processor (401) is connected to the memory (405);
the memory (405) is used to store executable program code;
the processor (401) runs a program corresponding to the executable program code by reading the executable program code stored in the memory (405), so as to execute the method according to any one of claims 1 to 10.
